**Europäisches Patentamt**

**European Patent Office**

**Office européen des brevets**

(19)

(11) **EP 1 170 704 A1**

(12) **EUROPEAN PATENT APPLICATION**

(43) Date of publication:
**09.01.2002 Bulletin 2002/02**

(51) Int Cl.[7]: **G07C 9/00**, H01Q 13/10,
H01Q 1/38, G01S 1/04

(21) Application number: **00114277.7**

(22) Date of filing: **04.07.2000**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **acter AG
8048 Zürich (CH)**

(72) Inventors:
• **Oswald, Benedikt
CH-8008 Zürich (CH)**

• **Lott, Urs
CH-8032 Zürich (CH)**
• **Spühler, Michael
CH-8057 Zürich (CH)**

(74) Representative: **Blum, Rudolf Emil Ernst
c/o E. Blum & Co Patentanwälte Vorderberg 11
8044 Zürich (CH)**

(54) **Portable access authorization device, GPS receiver and antenna**

(57)    An portable access authorization device (1) comprises a GPS receiver (5) for determining its position, a fingerprint detector (3) for verifying a fingerprint, and a radio interface (8) for communicating with other devices. For verifying access authorization, a user's fingerprint as well as his position are checked. Authorization is not granted if the fingerprint does not match or if the position is outside an authorized range, thereby increasing safety against fraudulent use. Further, techniques for building a GPS receiver as well as a high frequency antenna are disclosed.

**Fig. 2**

Printed by Jouve, 75001 PARIS (FR)

**Description**

The invention relates to a portable access authorization device, a GPS receiver and an antenna according to the preamble of the independent claims.

It is well known to use portable devices for providing access authorization, e.g. smart cards with a display showing a series of pseudo random numbers that can be used by the card holder to prove its identity when accessing on-line banking services.

Such devices can also be used to access other kind of services, e.g. computer systems of any type, ordering systems, communication networks etc.

Systems for authorizing access should have very high security and resist any conceivable attacks, such as theft of the authorization device.

GPS (Global Positioning System) receivers can be used for determining a position using RF signals emitted by satellites. Since such receivers are usually integrated in portable devices, their size should be small.

Planar antennas usually comprise one or more metal layers shaped for receiving electromagnetic radiation in a given range of frequencies. In many applications, slot antennas are preferred, where a slot separates an inner part of the metal layer from an outer part of the metal layer and forms a closed loop. The minimum size of such antennas is limited by the frequencies to be received. For many applications, small antennas would be preferred.

A problem to be solved by the present invention lies therefore in providing an access authorization device that provides a high degree of security.

Another problem to be solved lies in providing a small GPS receiver.

It is yet a further problem to provide a compact GPS receiver and an antenna that has compact shape so that it can e.g. be built into a smart card device.

These problems are solved by the devices of the independent claims.

In one aspect of the invention, a portable access authorization device for providing access to restricted services (or areas) is provided. It comprises a fingerprint detector as well as a GPS (Global Positioning System) receiver. The former is able to retrieve fingerprint data from the user, the latter can provide the current position of the device. The device is further provided with a transmitter/receiver to exchange information based on these data with other nearby devices.

Furthermore, a method is provided for determining an authorization of a person to access a restricted service. In this method, the person's fingerprint is scanned and the device position is measured. The position measurement is carried out by a GPS device. Then, fingerprint data and position data, or data derived therefrom, are transmitted to a remote entity, such as a telebanking computer. This rule set can e.g. consist of a list of authorized fingerprint data, as well as an area where each of the fingerprint holders is authorized to access the service.

From the position data and the fingerprint it can be determined who requests access and where she/he requests it from. In particular, the position can e.g. be compared with an authorized area. If the position is not within the authorized area, access is not granted. This ensures that stolen cards cannot be used from afar, even if the thief is able to fake the fingerprint. Also, the position data can help to locate the thief.

The position data can e.g. comprise the detailed position of the GPS receiver. However, for reducing data traffic and minimizing the risk of attacks, it can also be a simple yes/no message indicating if the device is within a certain authorized area. In this case, the position is directly compared to a predefined area stored in a memory of the device.

The fingerprint data can e.g. comprise detailed parameters of the person's fingerprint. Preferably, however, the person's fingerprint parameters never leave the device. Rather, they are directly compared to predefined parameters stored in a memory of the device. This reduces data traffic and makes it easier to design the device as an attack-proof, closed system.

Such a device can e.g. be integrated into a smart card.

In another aspect of the invention, a GPS receiver is provided that has small size. This object is achieved by using two low noise amplifiers (LNAs) with a filter arranged between them. Both LNAs and the filer are integrated on a single semiconductor chip. The filter is an arrangement of inductances and capacitors so that it can be integrated using conventional semiconductor techniques and therefore uses only little space. By placing it between two LNAs, its design becomes less dependent on the electrical properties of the antenna and the following downconverter.

Preferably, the semiconductor chip is made of GaAs, since this material has low loss at high frequencies, which improves the high frequency properties of the filter.

In yet a further aspect of the invention, a planar antenna for high frequency radio signals is provided. It comprises a metal layer on a dielectric substrate. A slot forming a closed loop is arranged in the metal layer and acts as a slot waveguide. The slot follows a meandering path, i.e. its path describes alternating left and right turns. In contrast to a conventional elliptic or circular slot, the meandering path increases the effective length of the slot, thereby decreasing the antenna's resonance frequency. This allows to build a more compact antenna for a given frequency.

Further preferred features and aspects of the present invention are described in the dependent claims as well as in the following description, which makes reference to the enclosed figures. These figures show:

Fig. 1 an embodiment of an authorization device integrated into a smart card,

Fig. 2 a block diagram of the device of Fig. 1,

Fig. 3 the device of Fig. 1 communicating with a local and a remote computer,

Fig. 4 a possible series of steps taken during authorization,

Fig. 5 a block diagram of a preferred embodiment of a GPS receiver,

Fig. 6 the RF amplifier of the GPS receiver of Fig. 5,

Fig. 7 the circuit diagram of one stage of the two LNA amplifiers of Fig. 6,

Fig. 8 a top view of a preferred embodiment of a planar RF antenna,

Fig. 9 a section along line IX-IX of Fig. 8 (not to scale in vertical direction),

Fig. 10 a slot path for an antenna with threefold symmetry,

Fig. 11 a slot path for an antenna with six-fold symmetry,

Fig. 12 an alternative to the embodiment of Fig. 8,

Fig. 13 a further slot path for an antenna and

Fig. 14 an alternative to the embodiment of Fig. 12.

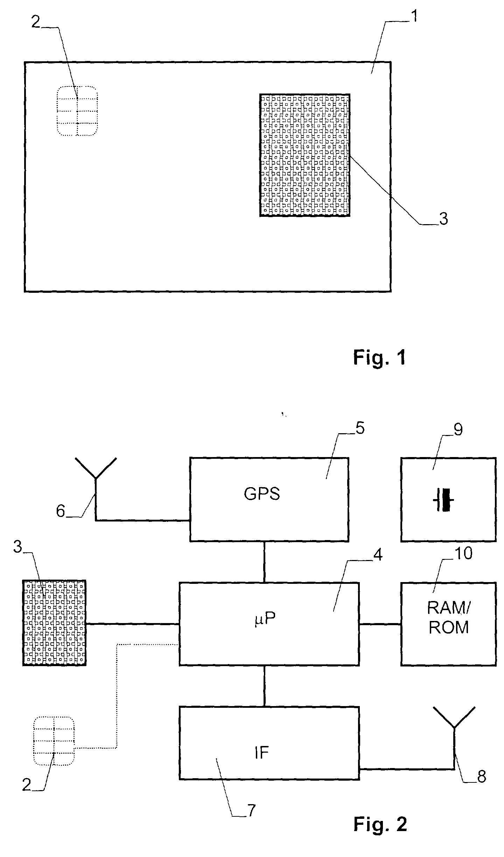

A preferred embodiment of an authorization device 1 is shown in Fig. 1. It is arranged in a housing having the area of a smart card of approximately 86 mm $\times$ 56 mm and a thickness of preferably less than 1 mm. Optional contact pads 2 can be used for connecting the device to a card reader. A fingerprint detector 3 is arranged on the surface of housing 1.

A block circuit diagram of the device is shown in Fig. 2. The device comprises a microprocessor 4, a GPS receiver 5 with a GPS antenna 6, a radio interface 7 with an interface antenna 8, a power supply 9 (e.g. consisting of a battery) and a memory 10.

The GPS receiver is designed for receiving and demodulating GPS data and determining the position of the device therefrom. General GPS receiver technology is known to the person skilled in the art. Some preferred features of the GPS receiver and its antenna are described below.

The fingerprint detector 3 comprises e.g. an array of electrodes and electronics for measuring the capacity between the electrodes and therefrom the fingerprint pattern of a finger pressed against the detector. Such a detector is known to a person skilled in the art.

The radio interface 7 comprises a radio transmitter/receiver and is adapted to establish digital radio communication between microprocessor 4 and another device. It is preferably based on low power wireless data transfer technology.

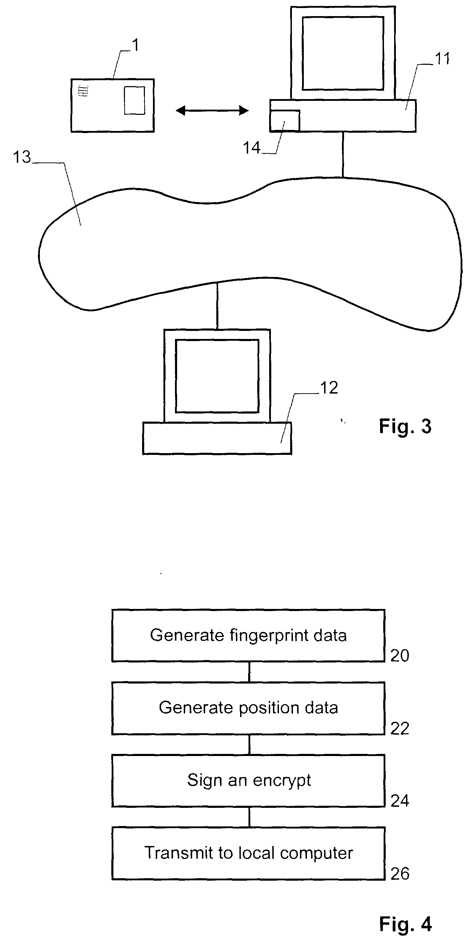

A typical application of the device of Fig. 1 and 2 is shown in Fig. 3. Here, a user is located at a local computer 11, which is connected to a remote computer 12 via a communication network, such as the Internet or a telephone network. Remote computer 12 can e.g. be located at a bank and run a telebanking application.

The user wants to log into remote computer 12.

For this purpose, computer 11 must be equipped with a radio interface 14 capable to communicate with radio interface 7 of the user's authorization device 1.

For logging in, the user tells local computer 11 to establish contact with remote computer 12. Remote computer 12 requests authorization before providing access. This causes local computer 11 to send a message via radio interfaces 14 and 7 to authorization device 1. At the same time, the user is prompted to place his finger on fingerprint detector 3.

Now, the steps shown in Fig. 4 are carried out in authorization device 1.

First, step 20, the authorization device generates "fingerprint data". This data can e.g. consist of the result of a comparison between the user's fingerprint and a predefined fingerprint. For this purpose, fingerprint detector 3 measures suitable parameters of the user's fingerprint and compares them to predefined parameters stored in memory 10. If the parameters match, the fingerprint data indicates that the user is authorized to use the card. This has the advantage that the actual fingerprint parameters never leave the device, which makes fraudulent manipulations more difficult.

The fingerprint data is generated by a fingerprint comparator of authorization device 1, which can e. g. be part of the software of microprocessor 4.

Alternatively, the fingerprint data may also contain the fingerprint's parameters and comparison can take place at remote computer 12.

In step 22, the authorization device generates "position data". This data can e.g. consist of the result of a comparison between the current position of the device and a predefined "authorized" area stored in memory 10. If the current position lies within the authorized area, the position data indicates that the card has been used in an authorized place.

The position data is generated by a position comparator of authorization device 1, which can e.g. be part of the software of microprocessor 4.

Alternatively, the position data can also contain the device position itself, which can then be checked at remote computer 12.

In step 24, the fingerprint data, the position data and additional data identifying autzorization device 1 can e.g. be digitally signed and encrypted. Signing can e.g. use a secret key of an asymmetric key pair attributed to the user, encryption can use a public key of an asymmetric key pair attributed to remote computer 12. Corresponding techniques are known to the person skilled in the art.

The signed and encrypted data is then transmitted to local computer 11, which forwards it to remote computer 12. Remote computer 12 decrypts it, checks its signature, and checks its contents against a given rule set. If it is found that authorization device 1 is used by the authorized user within an authorized area, access is granted. Otherwise, access is refused.

It must be noted that, in addition or alternatively to radio interface 7, other communication means could be used for transferring data from authorization device 1 to local computer 11. For instance, the contact pads 2 mentioned above could be used. Alternatively, authorization device 1 may contain a display that displays an encrypted number containing the result of the authorization check, and the user can input this number in local computer 11 by hand.

Instead of local computer 11, any other suitable communication terminal can be used, such as a cellular phone or an electronic notepad connected to a network.

In the following, the design and arrangement of GPS receiver 5 and its antenna 6 is described. Even though these components are well suited to be used the authorization device described above, the corresponding techniques can also be applied in numerous other applications.

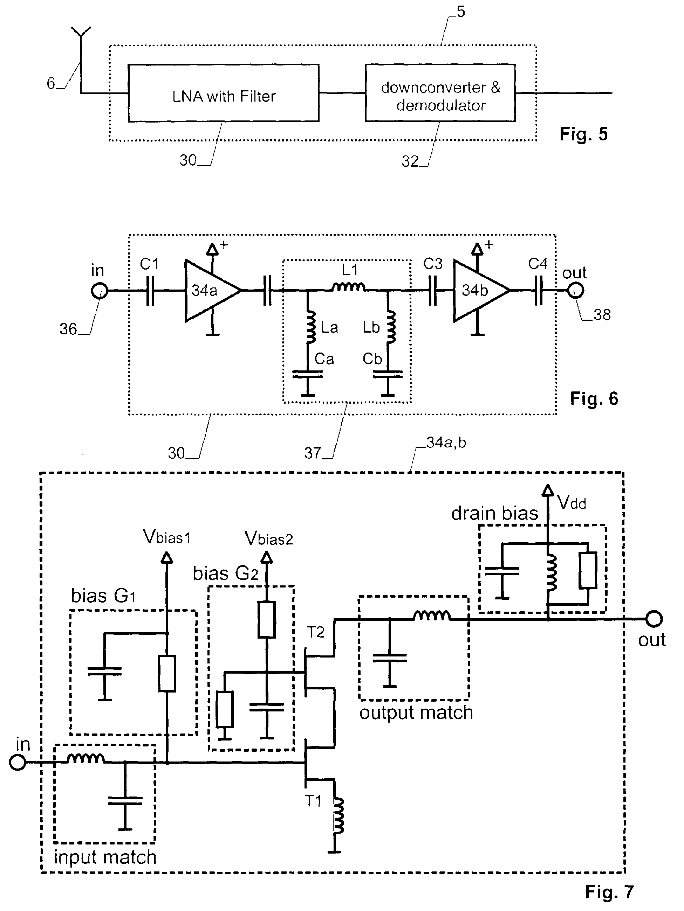

As can be seen from Fig. 5, GPS receiver 5 consists of a RF preamplifier 30 and a GPS downconverter and demodulator 32.

RF preamplifier 30 comprises two or more stages of low noise amplifiers (LNAs) and a suitable band pass filter for filtering out most frequencies outside the GPS carrier frequency at 1.575 GHz. LNAs are amplifiers with a noise figure of less than 3 dB, preferably less than 2 dB, at 1.575 GHz.

GPS demodulator 32 comprises the circuitry for downmixing and demodulating the GPS signal and to calculate the device's position therefrom.

Suitable GPS demodulators are commercially available as bare semiconductor chips (dies) or chip-scale packages (CSP) and can therefore be readily used even if available space is small.

Conventional LNA amplifiers with suitable filters are, however, bulky. In particular, they require ceramic filters or surface acoustic wave filters, both of which are components with a thickness exceeding e.g. the available space in a smart card housing.

Hence, an RF amplifier 30 as shown in Fig. 6 is used, wherein all components of this amplifier, including inductances (coils) and capacitors, are integrated on a single GaAs chip. This allows to generate a very compact circuit. In addition to this, the inductances and capacitors can profit from the low losses of the GaAs chip at high frequencies.

The RF amplifier 30 contains two LNA 34a, 34b. The first LNA 31a is connected to the RF amplifier input 36 over a capacitor C1. The output of LNA 34a is connected to a filter 37 via a capacitor C2. Filter 37 contains a first inductance L1 arranged in the signal path; a first resonant circuit with an inductance La and a capacitor Ca arranged in series and located before inductance L1, connecting the signal path to ground; and a second resonant circuit with an inductance Lb and capacitor Cb arranged in series and located after inductance L1, connecting the signal path to ground. The output of filter 37 is connected via a capacitor C3 to the input of second LNA 34b. The output of the second LNA 34b is connected via a capacitor C4 to the RF amplifier output 38.

The resonant frequencies of both resonant circuits La, Ca and Lb, Cb lie between 1.575 and 1.8 GHz. Their primary purpose is to suppress interference generated by cellular phones, in particular at a frequency of 1.7 - 1.9 GHz. The other components of the filter, in particular C2, C3 and L1, are designed to yield optimum transmission at 1.575 GHz.

By arranging filter 37 between two amplifiers, the filter is well isolated from the electric properties of antenna 6 and the GPS demodulator 32, which allows to design a highly accurate and stable filter.

Fig. 7 shows the circuit diagram of one of the two (substantially identical) LNAs 34a, 34b. As can be seen, the amplifier's active elements are two transistors T1, T2 in cascode operation. Such an arrangement provides better decoupling between the LNAs input and output, thereby again separating filter 37 from the electrical properties of the other components of the GPS receiver.

In addition to this, LNA 34a, 34b comprises standard circuitry for matching input and output and for generating bias voltages. All this circuitry is integrated on the same GaAs chip as the other components of RF amplifier 30.

The GPS receiver requires an antenna 6 for capturing the weak GPS signals at 1.575 GHz. This antenna must be integrated in the housing of authorization device 1, i.e. its thickness should be below 1 mm and its area should not exceed $50 \times 50$ mm$^2$.

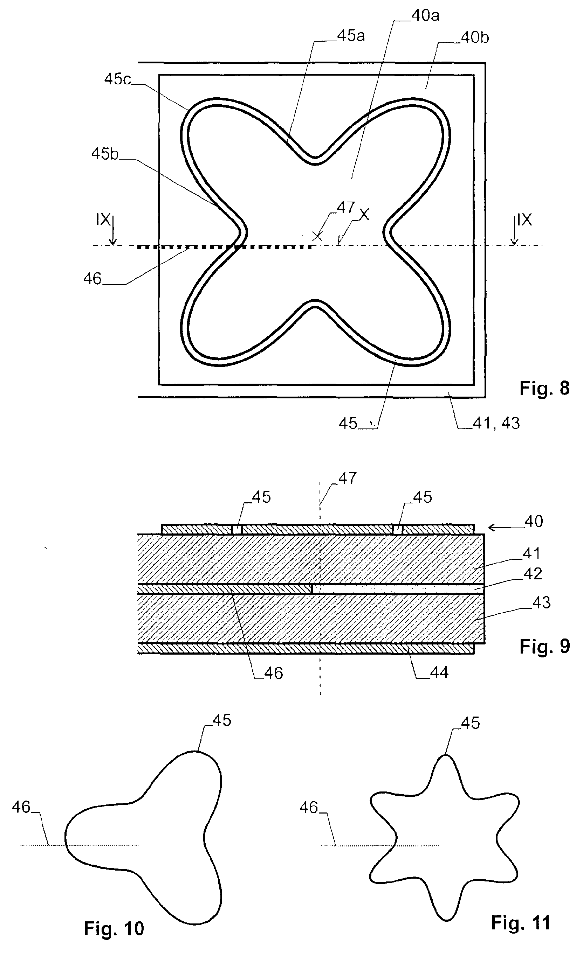

A suitable antenna is shown in Figs. 8 and 9. (Note that the dimensions perpendicular to the dielectric substrate has been zoomed in Fig. 9 for better visibility of the individual layers.)

The antenna shown here is well suited for a GPS receiver but can be used for receiving other high frequency signals as well, in particular signals above 1 GHz.

From top to bottom, the antenna comprises a first metal layer 40, an upper dielectric layer 41, an adhesive layer 42, a lower dielectric layer 43 and a second metal layer 44. The thickness of the layers 41, 43 is preferably between 250 and 500 $\mu$m each, the thickness of the metal and glue layers 40, 44 and 42 is e.g. between 10 and 20 $\mu$m. The dielectric layers form a substrate for the antenna and are preferably made of a material having low loss and high relative permittivity, i.e. $\varepsilon \geq 3$, preferably $\varepsilon = 6$, at the operating frequency of 1.575 GHz.

First metal layer 40 is divided into an inner part 40a and an outer part 40b divided by a slit 45. Slit 45 extends along a smooth, meandering path, i.e. its path describes alternating left and right turns.

The path of slot 45 forms at least three, preferably four or five U-shaped projections, each having two substantially straight, parallel legs 45a, 45b joined by a curved section 45c.

The path of slot 45 has an n-fold symmetry axis 47 perpendicular to the dielectric layers 41, 43, i.e. a rotation about 360°/n maps the path onto itself. Preferably, n is four, but generally it can be any number larger than or equal to three.

A single metal strip 46 extends in adhesive layer 42 between and parallel to metal layers 40 and 44, electrically insulated from both metal layers by dielectric layers 41, 43. It is used for coupling the signal out of antenna 6 and feeding it to RF preamplifier 30. If the antenna is used for transmitting a signal, the same strip is used for coupling the signal into it.

Metal strip 46 is offset by a distance X from symmetry axis 47.

Outer part 40b of metal layer 40 and all of metal layer 44 are grounded. Inner part 40a of metal layer 40 is free floating.

The antenna shown in Figs. 8 and 9 works as follows. The circularly polarized radiation from the GPS transmitters generates electric and magnetic fields in the antenna. Slot 45 forms a waveguide supporting a TE (transversal electric) mode. This is a mode that has only a magnetic field component in the direction of propagation. The effective relative permittivity of the slot is determined by the relative permittivity of the dielectric layers 41, 43 and the permittivity of the material above the slot, which is usually air.

Resonance is achieved if the length of the slot's path equals the wavelength of the electromagnetic mode propagating along the slot waveguide. Using a meandering path, a lower resonance frequency can therefore be achieved. For instance, the antenna of Fig. 8 on a substrate with a relative permittivity $\varepsilon$ of 6.14 requires a square patch with a length of approximately 38 mm, while a patch covering at least four times this area would be required for a circular slot.

There is no galvanic connection between metal strip 46 and any parts of the first or second metal layers 40, 44. Received or transmitted electromagnetic power is electromagnetically coupled from the radiating slot onto the strip or vice versa.

The length and position of metal strip 46 is varied depending on the type of polarisation of the RF radiation. There are two degrees of freedom, first the amount of feed overlap and second the amount of right or left offset X.

Feed overlap is defined as the section of the feed line that is added (positive feed overlap) or cut away (negative feed overlap) from the nominal feed length of metal strip 46. Nominal feed length is defined as the length of metal strip 46 when it ends exactly in a position under the center of the slot's path.

If offset X is 0, the antenna can be used for linear polarization. The offset X shown in Fig. 8 is approximately correct for right hand circular polarization, an offset in opposite direction for circular left hand polarization.

Circular polarization can only be achieved if the symmetry of the geometry is broken, i.e. if X = 0.

The purpose of lower layer 44 lies in shielding the antenna from below and in particular in creating a well defined environment for wave propagation along metal strip 46.

If the arrangement of the feed line is changed, other resonances are excited. For example, if the feed line is situated in the direction of one of the U-shaped projections, then longitudinal resonances are excited (or received) having different resonance frequencies.

In the embodiment of Fig. 8, the path of the curve can be written, in parametric representation, by:

$$x(\varphi) = \cos\varphi \cdot (R + A \cdot \sin^2\alpha)$$

$$y(\varphi) = \sin\varphi \cdot (R + A \cdot \cos^2\alpha),$$

with

$$\alpha = \pi \cdot \mathrm{mod}(\varphi, p)/p,$$

and

$$p = 2\pi/n,$$

wherein x and y are orthogonal coordinates in the plane of first metal layer 40, $\varphi$ is a parameter running from 0 to $2\pi$, and n is an integer larger than 2. R is the inner radius of the slot's path and A is the amplitude of the projections. Best geometries are obtained for R/A between 0.8 and 1.2.

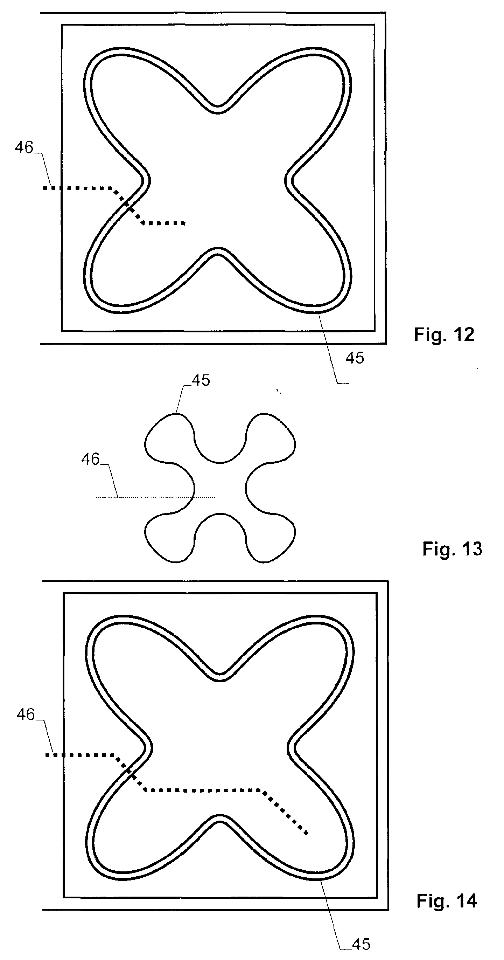

As mentioned above, the path of slot 45 has fourfold symmetry. It is, however, also possible to use a path with lower or higher symmetry. Figs. 10 and 11 show possible paths with three and six fold symmetry.

In Figs. 8 and 10, 11, metal strip 46 is straight and intersects the slot's path under a non-perpendicular angle. Fig. 12 shows a preferred embodiment where strip 46 intersects the slot's path perpendicularly. Such an arrangement provides better coupling between the strip's and the slot's TE modes. A further alternative is shown in Fig. 14, where strip 46 further extends into one of the arms of the slot's path for better matching.

As mentioned, the legs 45a, 45b of each projection of the slot's path are substantially parallel. This geometry has the advantage that it yields a large path length. An even larger path length could be achieved by designing the base of the projections to be narrower than their outer section, as it depicted in Fig. 13. However, depending on the dimensions of the device and the desired resonance frequency, such an arrangement can lead to cross talk between the legs 45a, 45b, which ca lead to an undesired increase in resonance frequency.

**Claims**

1. A portable access authorization device for providing access to restricted services, **characterised by** a fingerprint detector (3), a GPS receiver (5) and an interface (7) for transmitting data derived from said fingerprint detector (3) and said GPS receiver (5).

2. The device of claim 1 wherein said interface (7) comprises a radio transmitter and receiver.

3. The device of one of the preceding claims further comprising a memory (10) for storing predefined parameters and a fingerprint comparator for carrying out a comparison between said predefined parameters and fingerprint parameters determined by said fingerprint detector (3), wherein said interface (7) is designed for transmitting a result of the comparison.

4. The device of one of the preceding claims further comprising a memory (10) for storing a predefined area and a position comparator for carrying out a comparison between said predefined area and a position determined by said GPS receiver (5), wherein said interface (7) is designed for transmitting a result of the comparison.

5. The device of one of the preceding claims comprising a housing having the size of a smart card.

6. The device of one of the preceding claims comprising a housing and an antenna (6) for the GPS receiver (5) arranged in the housing.

7. A method for determining an authorization of a person to access a restricted service **characterized by** the steps of

   scanning a fingerprint of the person for providing fingerprint data of said person,
   measuring a position of said person by GPS for determining position data, and
   transmitting said fingerprint data and said position data to a remote entity.

8. The method of claim 7, further comprising the step of comparing said position against an authorized area and rejecting said access if said position lies outside said authorized area.

9. The method of one of the claims 7 or 8, wherein the fingerprint and the position are determined in a portable device (1), which portable device compares the fingerprint data to predefined fingerprint data.

10. A GPS receiver, in particular for a device of one of the claims 1 - 6, comprising a semiconductor chip, at least one low noise amplifier integrated on said chip for amplifying an RF signal, and a bandpass filter (37) for suppressing noise in said RF signal, **characterised in that** at least two low noise amplifiers (34a, 34b) are integrated on said chip, wherein said bandpass filter (37) is arranged between a first (37a) and a second (37b) of said low noise amplifiers and is also integrated on said chip as an arrangement comprising inductances (L1, La, Lb) and capacitors (C2, C3, Ca, Cb).

11. The GPS receiver of claim 10, wherein said semiconductor chip is of GaAs.

12. The GPS receiver of one of the claims 10 or 11, wherein said filter comprises at least two resonant circuits (La, Ca; Lb, Cb), each resonant circuit comprising a capacitor (Ca, Cb) in series with an inductance (La, Lb), connecting a signal path to ground and having a resonance frequency between 1.575 and 1.8 GHz.

13. The GPS receiver of claim 12, wherein wherein an inductance (L1) is arranged in said signal path between said resonant circuits (La, Ca; Lb, Cb).

14. The GPS receiver of claim 13 further comprising a first capacitor (C2) arranged in said signal path before a first of said resonant circuits and a second capacitor (C3) arranged in said signal path after a second of said resonant circuits.

15. The GPS receiver of one of the claims 10 - 14, wherein each low noise amplifier contains one or two transistors (T1, T2), in particular two transistors in cascode operation.

16. A planar antenna for high frequency radio signals, in particular for the GPS receiver of one of the claims 10 - 15, comprising a first metal layer (40) on a dielectric substrate (41, 43) and a slot (45) arranged in the first metal layer, said slot separating an inner part (40a) of said first metal layer from an outer part (40b) of said first metal layer and forming a closed loop, **characterised in that** said slot (45) follows a meandering path.

17. The antenna of claim 16, wherein said path follows at least three, preferably three to five, in particular four, U-shaped projections.

18. The antenna of claim 17, wherein each of said U-shaped projections comprises'two substantially straight, parallel legs (45a, 45b) joined by a curved slot section (45c).

19. The antenna of one of the claims 16 - 18, wherein said meandering path is smooth.

**20.** The antenna of one of the claims 16 - 19, further comprising a second metal layer (44) arranged on the substrate opposite to the first metal layer (40), in particular wherein the second metal layer (44) is grounded.

**21.** The antenna of one of the claims 16 - 20, further comprising a single metal strip (46) arranged parallel to and at a distance from the first metal layer (40) for coupling a signal out of or into the antenna.

**22.** The antenna of the claims 20 and 21, wherein the metal strip (46) is arranged between the first and second metal layers.

**23.** The antenna of one of the claims 21 or 22, wherein said metal strip (46) intersects said slot (45) substantially perpendicularly.

**24.** The antenna of one of the preceding claims wherein said path has an n-fold symmetry axis (47) with $n \geq 3$.

**25.** The antenna of one of the claims 21 - 23 and of 24, wherein said metal strip (46) is offset from said symmetry axis (47) for receiving/transmitting circular polarized radiation.

**26.** The antenna of one of the claims 16 - 25, wherein said path follows a curve parametrised by

$$x(\varphi) = \cos\varphi \cdot (R + A \cdot \sin^2\alpha)$$

$$y(\varphi) = \sin\varphi \cdot (R + A \cdot \cos^2\alpha),$$

with

$$\alpha = \pi \cdot \mathrm{mod}(\varphi, p)/p,$$

and

$$p = 2\pi/n$$

wherein x and y are orthogonal coordinates in a plane of said first metal layer, $\varphi$ is a parameter running from 0 to $2\pi$, and n is an integer larger than 2, R is a radius and A an amplitude, and in particular wherein R/A is between 0.8 and 1.2.

**27.** Use of the antenna of one of the claims 16 - 26 in a device of one of the claims 1 - 6.

**Fig. 1**

**Fig. 2**

**Fig. 3**

**Fig. 4**

| Generate fingerprint data |
| 20 |

| Generate position data |
| 22 |

| Sign an encrypt |
| 24 |

| Transmit to local computer |
| 26 |

Fig. 5

LNA with Filter

downconverter & demodulator

5

6

30

32

Fig. 6

in

C1

34a

C3

34b

C4

out

36

38

L1

La

Lb

Ca

Cb

30

37

34a,b

Fig. 7

drain bias

Vdd

Vbias1

Vbias2

bias G2

T2

bias G1

output match

in

T1

out

input match

45c

45b

IX

46

45a

40a

40b

47 X

X

IX

**Fig. 8**

45

41, 43

45

47

45

40

41
42
43

46

44

**Fig. 9**

45

46

**Fig. 10**

45

46

**Fig. 11**

**Fig. 12**

**Fig. 13**

**Fig. 14**

EP 1 170 704 A1

European Patent Office

**EUROPEAN SEARCH REPORT**

Application Number

EP 00 11 4277

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 56429 A (IDENTIX INCORPORATED) 4 November 1999 (1999-11-04) * page 1, line 14 - page 9, line 9 * * page 10, line 24 - page 19, line 24 * * page 22, line 6 - line 23; figures 1-8 * | 1-9 | G07C9/00 H01Q13/10 H01Q1/38 G01S1/04 |
| X A | GB 2 330 469 A (FUJITSU LIMITED) 21 April 1999 (1999-04-21) * page 1, line 5 - page 8, line 8 * * page 10, line 3 - page 14, line 4 * * page 27, line 26 - page 32, line 30; figures 1-3,17-24 * | 1-4,7-9 5,6 | |
| A | US 5 715 905 A (KAMAN) 10 February 1998 (1998-02-10) * column 6, line 28 - column 7, line 55; figures 1,2 * | 1,7 | |
| A | WO 97 41499 A (MARTINEZ) 6 November 1997 (1997-11-06) * page 5, line 10 - page 14, line 11; figures 1-3 * | 1,7 | TECHNICAL FIELDS SEARCHED (Int.Cl.7) |
| A | WO 00 36605 A (KENT RIDGE DIGITAL LABS) 22 June 2000 (2000-06-22) * page 3, line 5 - page 4, line 16 * * page 5, line 27 - page 12, line 17; figures 1-3 * | 1,7 | G07C G07F G06K H01Q G01S |
| A | WO 98 10246 A (UNIVERSITY OF FLORIDA) 12 March 1998 (1998-03-12) * page 2, line 23 - page 5, line 16 * * page 6, line 30 - page 15, line 6; figures 1-20 * | 1,7 | |
| | -/-- | | |

The present search report has been drawn up for all claims

| Place of search | Date of completion of the search | Examiner |
|---|---|---|
| THE HAGUE | 22 January 2001 | Rivero, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

Application Number

EP 00 11 4277

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

14

European Patent Office

# EUROPEAN SEARCH REPORT

Application Number

EP 00 11 4277

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | WO 99 06850 A (SIERRA MONOLITHICS, INC.) 11 February 1999 (1999-02-11) | 10,11 | |
| A | * page 4, line 31 - page 9, line 13; figures 1-5 * | 12-15 | |
| Y | WO 99 57929 A (TRIMBLE NAVIGATION LIMITED) 11 November 1999 (1999-11-11) | 10,11 | |
| A | * page 4, line 4 - page 7, line 12 * <br> * page 9, line 3 - page 17, line 5; figures 1,2 * | 12-15 | |
| A | WO 98 50983 A (ADVANCED TECHNOLOGIES INTERNATIONAL, LTD.) 12 November 1998 (1998-11-12) <br> * page 35, line 14 - page 39, line 14; figures 16,17 * | 10 | |
| A | US 4 683 443 A (YOUNG ET AL.) 28 July 1987 (1987-07-28) <br> * column 1, line 17 - line 39 * <br> * column 2, line 52 - column 4, line 38 * | 10,11 | |
| A | US 5 923 287 A (LENNEN) 13 July 1999 (1999-07-13) <br> * column 5, line 60 - column 12, line 60; figures 1-14 * | 10 | |
| Y | WO 99 62137 A (THE REGENTS OF THE UNIVERSITY OF MICHIGAN) 2 December 1999 (1999-12-02) | 16 | |
| A | * page 6, line 4 - page 12, line 19; figures 1-6 * | 17-27 | |
| Y | US 6 034 645 A (LEGAY ET AL.) 7 March 2000 (2000-03-07) | 16 | |
| A | * column 2, line 62 - column 6, line 65; figures 1-9 * | 17-27 | |

TECHNICAL FIELDS SEARCHED (Int.Cl.7)

-/--

The present search report has been drawn up for all claims

| Place of search | Date of completion of the search | Examiner |
|---|---|---|
| THE HAGUE | 22 January 2001 | Rivero, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| **European Patent Office** | **LACK OF UNITY OF INVENTION SHEET B** | **Application Number** EP 00 11 4277 |
|---|---|---|

The Search Division considers that the present European patent application does not comply with the requirements of unity of invention and relates to several inventions or groups of inventions, namely:

1. Claims: 1-9

    Portable access authorization device having a fingerprint detector and a GPS receiver.

2. Claims: 10-15

    Small-size GPS receiver using two low-noise amplifiers with a filter arranged between them.

3. Claims: 16-27

    Planar antenna for high frequency radio signal comprising a metal layer on a dialectric substrate and a slot forming a closed loop.

European Patent
Office

**EUROPEAN SEARCH REPORT**

Application Number

EP 00 11 4277

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 98 49742 A (MOTECO AB) 5 November 1998 (1998-11-05) * page 3, line 3 - page 5, line 26; figures 1-4 * | 16 | |
| A | EP 0 961 344 A (ALCATEL) 1 December 1999 (1999-12-01) * column 6, line 54 - column 11, line 3; figures 1-3 * | 16 | |

TECHNICAL FIELDS
SEARCHED      (Int.Cl.7)

The present search report has been drawn up for all claims

| Place of search | Date of completion of the search | Examiner |
|---|---|---|
| THE HAGUE | 22 January 2001 | Rivero, C |

EPO FORM 1503 03.82 (P04C01)

**ANNEX TO THE EUROPEAN SEARCH REPORT
ON EUROPEAN PATENT APPLICATION NO.**

EP 00 11 4277

This annex lists the patent family members relating to the patent documents cited in the above–mentioned European search report.
The members are as contained in the European Patent Office EDP file on
The European Patent Office is in no way liable for these particulars which are merely given for the purpose of information.

22–01–2001

| Patent document cited in search report | | Publication date | Patent family member(s) | | Publication date |
|---|---|---|---|---|---|
| WO 9956429 | A | 04–11–1999 | AU | 3761099 A | 16–11–1999 |
| GB 2330469 | A | 21–04–1999 | JP | 11120240 A | 30–04–1999 |
| US 5715905 | A | 10–02–1998 | US<br>AU<br>WO | 5660246 A<br>1118397 A<br>9717237 A | 26–08–1997<br>29–05–1997<br>15–05–1997 |
| WO 9741499 | A | 06–11–1997 | AU | 2802797 A | 19–11–1997 |
| WO 0036605 | A | 22–06–2000 | NONE | | |
| WO 9810246 | A | 12–03–1998 | AU<br>EP | 4253297 A<br>0923708 A | 26–03–1998<br>23–06–1999 |
| WO 9906850 | A | 11–02–1999 | AU | 8683598 A | 22–02–1999 |
| WO 9957929 | A | 11–11–1999 | US | 6122506 A | 19–09–2000 |
| WO 9850983 | A | 12–11–1998 | AU<br>CN<br>EP | 7474898 A<br>1262797 T<br>0988663 A | 27–11–1998<br>09–08–2000<br>29–03–2000 |
| US 4683443 | A | 28–07–1987 | NONE | | |
| US 5923287 | A | 13–07–1999 | NONE | | |
| WO 9962137 | A | 02–12–1999 | AU | 4817899 A | 13–12–1999 |
| US 6034645 | A | 07–03–2000 | FR<br>CA<br>EP | 2760134 A<br>2228631 A<br>0860894 A | 28–08–1998<br>24–08–1998<br>26–08–1998 |
| WO 9849742 | A | 05–11–1998 | SE<br>BR<br>BR<br>DE<br>DE<br>EP<br>EP<br>SE<br>WO | 511295 C<br>9809332 A<br>9809782 A<br>19882352 T<br>19882353 T<br>0979536 A<br>1016159 A<br>9701646 A<br>9849743 A | 06–09–1999<br>04–07–2000<br>20–06–2000<br>25–05–2000<br>13–04–2000<br>16–02–2000<br>05–07–2000<br>04–02–1999<br>05–11–1998 |
| EP 961344 | A | 01–12–1999 | FR<br>AU<br>CN | 2779276 A<br>3125799 A<br>1237807 A | 03–12–1999<br>09–12–1999<br>08–12–1999 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 00 11 4277

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2001

| Patent document cited in search report | Publication date | Patent family member(s) | Publication date |
|---|---|---|---|
| EP 961344 A | | JP 2000068731 A | 03-03-2000 |

EPO FORM P0459

For more details about this annex : see Official Journal of the European Patent Office, No. 12/82